(19) 

Europäisches Patentamt

European Patent Office

Office européen des brevets

(11)  **EP 4 375 634 B1**

(12) **EUROPEAN PATENT SPECIFICATION**

(45) Date of publication and mention
of the grant of the patent:
**31.12.2025 Bulletin 2026/01**

(21) Application number: **23828140.6**

(22) Date of filing: **04.07.2023**

(51) International Patent Classification (IPC):
*G01L 5/00* $^{(2006.01)}$

(52) Cooperative Patent Classification (CPC):
**G01L 5/0047;** Y02P 10/20

(86) International application number:
**PCT/CN2023/105773**

(87) International publication number:
**WO 2024/066641 (04.04.2024 Gazette 2024/14)**

(54) **METHOD FOR MEASURING RESIDUAL STRESS IN THIN PLATE**

VERFAHREN ZUR MESSUNG DER RESTSPANNUNG IN EINER DÜNNEN PLATTE

PROCÉDÉ DE MESURE DE CONTRAINTE RÉSIDUELLE DANS UNE PLAQUE MINCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.09.2022 CN 202211212028**

(43) Date of publication of application:
**29.05.2024 Bulletin 2024/22**

(73) Proprietors:
• **Chinalco Materials Application Research
Institute Co., Ltd
Changping District
Beijing 100044 (CN)**
• **Chinalco Advanced Manufacturing Co., Ltd.
Chongqing 400039 (CN)**

(72) Inventors:
• **WANG, Junqiang
Beijing 100044 (CN)**
• **CAO, Hailong
Beijing 100044 (CN)**
• **LIU, Cheng
Beijing 100044 (CN)**
• **WANG, Guojun
Beijing 100044 (CN)**
• **HUANG, Dongnan
Beijing 100044 (CN)**
• **LI, Wei
Beijing 100044 (CN)**

• **CONG, Fuguan
Beijing 100044 (CN)**
• **DONG, Xueguang
Beijing 100044 (CN)**
• **ZHANG, Siping
Beijing 100044 (CN)**
• **LUO, Haiyun
Beijing 100044 (CN)**
• **HUANG, Mingdong
Beijing 100044 (CN)**
• **LI, Kai
Beijing 100044 (CN)**
• **REN, Yibin
Beijing 100044 (CN)**
• **SONG, Xiaoyu
Beijing 100044 (CN)**
• **LI, Qing
Beijing 100044 (CN)**

(74) Representative: **Studio Torta S.p.A.
Via Viotti, 9
10121 Torino (IT)**

(56) References cited:
CA-A1- 3 086 808        CN-A- 104 535 226
CN-A- 108 827 513      CN-A- 110 243 516
CN-A- 111 157 157      CN-A- 113 094 842
CN-A- 115 290 241      JP-A- H06 102 107
JP-A- S63 268 517       JP-A- S63 268 517
JP-A- S63 273 518       KR-A- 19990 051 769

- ALAMOS LOS ET AL: "Residual stress measurement by successive extension of a slot: The crack compliance method", 1 January 1999 (1999-01-01), XP093214101, Retrieved from the Internet <URL:http://public.lanl.gov/prime/crackcmp.pdf> [retrieved on 20241011]

- "Master's Thesis", 12 June 2018, JIANGSU UNIVERSITY OF SCIENCE AND TECHNOLOGY, CN, article YAN, YI: "Research on Welding Residual Stress Measurement Technology of Thick Multipass Joint", pages: 1 - 79, XP009554331

## Description

### Cross-Reference to Related Application(s)

The present invention claims priority to patent application No. 202211212028.2, filed to the China National Intellectual Property Administration on September 30, 2022 and entitled "Method for Measuring Residual Stress in Thin Plate".

### Technical Field

The invention relates to the technical field of measuring of residual stress in thin plates, and particularly to a method for measuring residual stress in a thin plate.

### Background

High-performance thin plates are extensively applied to the fields of aerospace, electrical and electronic engineering, chip package, etc., for example, aircraft skin, chip lead frame processing, transformers and so on. In processes of processing and manufacturing the aircraft skin and chip lead frames by the thin plates, a removed surface area accounts for 80% of a total area, and a removed thickness accounts for 60% or above of a total thickness. The thin plates have low bending stiffness on account of thinness, and will largely deform even under low residual stress during a removal process. The premise of deformation control of the thin plate during the removal process is quantitative characterization of residual stress distribution of the thin plate in a thickness.

In a related art, internal residual stress of the thin plate is generally evaluated through a single-side corrosion method. In this method, one side of the thin plate is required to be protected by pasting a film, the other side of the thin plate is required to be corroded by a corrosive liquid, and after a corrosion depth reaches 50% of the thickness of the thin plate, a warpage deformation quantity is compared. This method can only qualitatively determine magnitude of the residual stress according to a deformation degree, but cannot quantitatively characterize a distribution rule of the residual stress in the thickness of thin plate. Document JPS63268517A discloses a method for reducing residual stress in a metal strip by introducing slits in to it.

Since the thin plate is not uniformly cooled during solution quenching, residual stress on a surface and at a center of the thin plate have different tensile and compressive states. Therefore, it is difficult to quickly guide optimization of thin plate manufacturing technique according to a deformation law obtained through the single-side corrosion method. With mass supply requirements of civil airliners and high-performance chip packaging materials, a breakthrough on quantitative characterization technique for residual stress of a thin plate is urgently required. Therefore, a method capable of rapidly and quantitatively characterizing residual stress distribution in a thin plate is required to effectively control processing deformation of the thin plate.

### Summary

Some embodiments of the invention provide a method for measuring residual stress in a thin plate, which is used for quantitatively characterizing a distribution rule of the residual stress on a thickness of the thin plate.

In order to realize the above objective, some embodiments of the invention provide a method for measuring residual stress in a thin plate. The method includes: S1: prearranging and cutting a plurality of fins that are parallel to a length direction of the thin plate at equal intervals along a width direction of the thin plate, where a length of each fin is the same as each other and less than a width of the thin plate, and the fins have fixed ends and movable ends that are opposite each other, computing x-direction strain $\varepsilon_{i0}$ and x-direction residual stress $\sigma_{i0}$ in the length direction of the thin plate borne by each fin according to lengths of each fin before and after cutting, and obtaining distribution of x-direction residual stress in the width direction of the thin plate according to $\sigma_{i0}$ of all the fins; S2: repeatedly cutting the fixed end of the each fin in a thickness direction of the thin plate, recording a cutting parameter, and a warpage condition and a bending parameter of the each fin after each cutting, computing a total cutting depth $Z_{ij}$ and x-direction residual stress $\sigma_{ij}$ of the each fin after each cutting, and obtaining distribution of x-direction residual stress in the thickness direction of the thin plate borne by an ith fin according to all ($\sigma_{ij}$; and S3: computing distribution $\sigma_x$, $\sigma_x = \sigma_{i0} + \sigma_{ij}$, of x-direction residual stress on a yz cross section of the thin plate according to $\sigma_{i0}$ of the ith fin computed in S1 and corresponding $\sigma_{ij}$ of the ith fin after jth cutting in S2.

In some embodiments, S1 includes: S1.1: arranging cutting marks at equal intervals in the width direction of the thin plate, where an extension direction of each cutting mark is the same as each other and parallel to the length direction of the thin plate and extends to an end of the thin plate, an extension length of each cutting mark is less than a length of the thin plate, and a region between any two cutting marks forms one fin, and recording an initial length $L_0$ of the ith fin before cutting; and S1.2: cutting the cutting marks through the thin plate in the thickness direction of the thin plate, and recording a

deformation length $L_{i0}$ of the each fin after deformation in the length direction of the thin plate.

In some embodiments, S1 further includes: S1.3: computing the x-direction strain $\varepsilon_{i0}$ and the x-direction residual stress $\sigma_{i0}$, $\varepsilon_{i0} = (L_0 - L_{i0}) / L_0$ and $\sigma_{i0} = E\varepsilon_{i0}$, in the length direction of the thin plate borne by each fin according to the recorded initial length $L_0$ of the fin and the deformation length $L_{i0}$ of the fin, where E is an elastic modulus of the thin plate.

In some embodiments, S2 includes: constraining two ends of the thin plate in the length direction before each cutting, so as to make an extension direction of each fin parallel to the width direction of the thin plate, and releasing the thin plate on one side of the movable end of the fin after each cutting, so as to compute and record the bending parameter of the ith fin after jth cutting.

In some embodiments, the total cutting depth $Z_{ij}$ and the x-direction residual stress $\sigma_{ij}$ of each fin after each cutting are expressed as: $S > Z_{ij} = j\Delta z$ ; $L_{ij} = L_{i0} - t$ and $\sigma_{ij} = \dfrac{E\pi}{90\mathrm{m} \cdot \Delta z \cdot \left[ S - (j-1) \right] \Delta z} \left( I_{ij} \arcsin \dfrac{h'_{ij}}{L_{ij}} - I_{i(j-1)} \arcsin \dfrac{h'_{i(j-1)}}{L_{ij}} \right)$ ;

where $\Delta z$ is a cutting depth of each cutting, t is a cutting width, $I_{ij}$ is inertia moment of an uncut portion of the ith fin after jth cutting, E is a Young's elastic modulus of the thin plate, $h'_{ij}$ is a warpage quantity of the ith fin after jth cutting minus a warpage quantity of a cut portion, $h_{ij}$ is a bending height of the ith fin after jth cutting, $L_{ij}$ is a remaining length of the ith fin after jth cutting, S is a thickness of the thin plate, m is an equivalent arc length of residual stress release of the ith fin after jth cutting, and under the condition that t is infinitely close to 0, a computational formula for $\sigma_{ij}$ is expressed as:

$$\sigma_{ij} = \frac{E\pi}{90\mathrm{m} \cdot \Delta z \cdot \left[ S - (j-1) \right] \Delta z} \left( I_{ij} \arcsin \frac{h_{ij}}{L_{ij}} - I_{i(j-1)} \arcsin \frac{h_{i(j-1)}}{L_{i(j-1)}} \right) .$$

In some embodiments, m is approximately expressed as: m = t + 0.75S; after jth cutting of the ith fin, a notch is formed, and the ith fin is bent to form a first bent surface and a second bent surface that are spaced apart from each other in the thickness direction of the thin plate; on an xz cross section of the thin plate, the first bent surface and the second bent surface are two arcs that have the same curvature but different arc lengths, the equivalent arc length m is a length of an arc formed between two ends of an opening of the notch on the cross section, and curvature of the equivalent arc length m is the same as curvature of the two arcs; and $h'_{ij}$ is a height between a warping end of the opening of the notch on the cross section and a top end of the fin after warping, and $h_{ij}$ is a height between a non-warping end of the opening of the notch on the cross section and the top end of the fin after warping.

In some embodiments, $\sigma_{ij}$ is obtained according to formulas as follows: $\mathrm{d}(\Sigma M_{ij}) = \sigma_{ij} \cdot \Delta z \cdot \mathrm{m} \dfrac{\left[ S - (j-1)\Delta z \right]}{2}$ ; and $\mathrm{d}(\Sigma M_{ij}) = \dfrac{E\pi}{180} \left( I_{ij} \arcsin \dfrac{h'_{ij}}{L_{ij}} - I_{i(j-1)} \arcsin \dfrac{h'_{i(j-1)}}{L_{ij}} \right)$ ;

where $\Sigma M_{ij}$ is total bending moment of the ith fin after jth cutting, and d($\Sigma M_{ij}$) is a bending moment increment of the ith fin after jth cutting.

In some embodiments, a computational method for $\Sigma M_{ij}$ is as follows: $\Sigma M_{ij} = \omega_{ij} M_{ij}$ ; where $\omega_{ij}$ is an average arc length, and $M_{ij}$ is average bending moment of the residual stress of the ith fin after jth cutting on an arc length of any unit; and after jth cutting, the i-th fin is bent to form a first bent surface and a second bent surface that are spaced apart from each other in the thickness direction of the thin plate, on an xz cross section of the thin plate, the first bent surface and the second bent surface are two arcs that have the same curvature but different arc lengths, the average arc length is between the two arcs, curvature of the average arc length is the same as curvature of the two arcs, and distances between the average arc length and the arcs on two sides are the same.

In some embodiments, a computational method for $M_{ij}$ is as follows: $M_{ij} = \dfrac{EI_{ij}\pi}{180\omega_{ij}} \arcsin \dfrac{h'_{ij}}{L_{ij}}$ .

In some embodiments, computational methods for $\omega_{ij}$, $\theta_{ij}$ and $I_{ij}$ are as follows: $\theta_{ij} = \dfrac{\omega_{ij}}{\rho_{ij}} \cdot \dfrac{180}{\pi}$ ; $\theta_{ij} = \arcsin \dfrac{h'_{ij}}{L_{ij}}$ and $\dfrac{1}{\rho_{ij}} = \dfrac{M_{ij}}{EI_{ij}}$ ; where $\rho_{ij}$ is a curvature radius of the ith fin after jth cutting, and $\theta_{ij}$ is a bending angle of the ith fin after jth cutting.

In some embodiments, S2 further includes: correcting the residual stress; $\Delta(\sigma_{ij}) = \dfrac{\sigma_{ij} \cdot \Delta z}{S - j\Delta z}$ ; and

$\sigma'_{ij} = \sigma_{ij} - \sum_1^{j-1} \Delta\sigma_{ij}$ ; where $\Delta(\sigma_{ij})$ is an effect of residual stress of layer $\Delta z$ on residual stress of the uncut portion, and

$\sigma'_{ij}$ is a residual stress correction value of the ith fin during jth cutting.

A technical solution of the invention provides a method for measuring residual stress in a thin plate. The method includes: S1: prearranging and cutting a plurality of fins that are parallel to a length direction of the thin plate at equal intervals in a width direction of the thin plate, where a length of each fin is the same as each other and less than a width of the thin plate, and the fins have fixed ends and movable ends that are opposite each other, computing x-direction strain $\varepsilon_{i0}$ and x-direction residual stress $\sigma_{i0}$ in the length direction of the thin plate borne by each fin according to lengths of each fin before and after cutting, and obtaining distribution of x-direction residual stress in the width direction of the thin plate according to $\sigma_{i0}$ of all the fins; S2: repeatedly cutting the fixed ends of the fins in a thickness direction of the thin plate, recording a cutting parameter, and a warpage condition and a bending parameter of each fin after each cutting, computing a total cutting depth $Z_{ij}$ and x-direction residual stress $\sigma_{ij}$ of each fin after each cutting, and obtaining distribution of x-direction residual stress in the thickness direction of the thin plate borne by an ith fin according to all $\sigma_{ij}$; and S3: computing distribution $\sigma_x$, $\sigma_x = \sigma_{i0} + \sigma_{ij}$, of x-direction residual stress on a yz cross section of the thin plate according to $\sigma_{i0}$ of the ith fin computed in S1 and corresponding $\sigma_{ij}$ of the ith fin after jth cutting in S2. According to this solution, according to distribution of a plurality of x-direction residual stress in the width direction (y direction) and the thickness direction (z direction) of the thin plate, distribution of the residual stress in the thin plate on the yz cross section is obtained, and the situation that a method for evaluating residual stress in a thin plate through a single-side corrosion method in the prior art can only qualitatively determine the residual stress, but cannot quantitatively characterize distribution of the residual stress in a thickness of the thin plate is avoided. Through computation of the solution, the residual stress and the distribution thereof in the thin plate are obtained, and characterization is accurate and reliable.

## Brief Description of the Drawings

The accompanying drawings of the description constitute part of the invention and serve to provide further understanding of the invention, and illustrative examples of the invention and the description of the illustrative examples serve to explain the invention and are not to be construed as unduly limiting the invention. In the accompanying drawings:

Fig. 1 shows a flow diagram of a method for measuring residual stress in a thin plate according to an example of the invention;

Fig. 2 shows a schematic structural diagram of a thin plate suitable for the method in Fig. 1;

Fig. 3 shows a schematic structural diagram of a thin plate after step S1.1;

Fig. 4 shows a schematic structural diagram of a thin plate after step S1.2;

Fig. 5 shows a schematic diagram of constraint a thin plate in step S2;

Fig. 6 shows a schematic diagram of cutting a thin plate in step S2;

Fig. 7 shows a schematic diagram of bending a thin plate in step S2; and

Fig. 8 shows a schematic diagram of an xz section of a thin plate in step S2.

The above figures include reference numerals as follows:
11. notch; 12. first bent surface; and 13. second bent surface.

## Detailed Description of the Embodiments

Technical solutions in examples of the invention will be clearly and completely described below in combination with accompanying drawings in the examples of the invention. Apparently, the examples described are merely some examples rather than all examples of the invention. The following description of at least one illustrative example is merely illustrative in nature and in no way serves as any limitation of the invention and its application or use. On the basis of examples of the invention, all other examples obtained by those of ordinary skill in the art without making creative efforts all fall within the scope of protection of the invention.

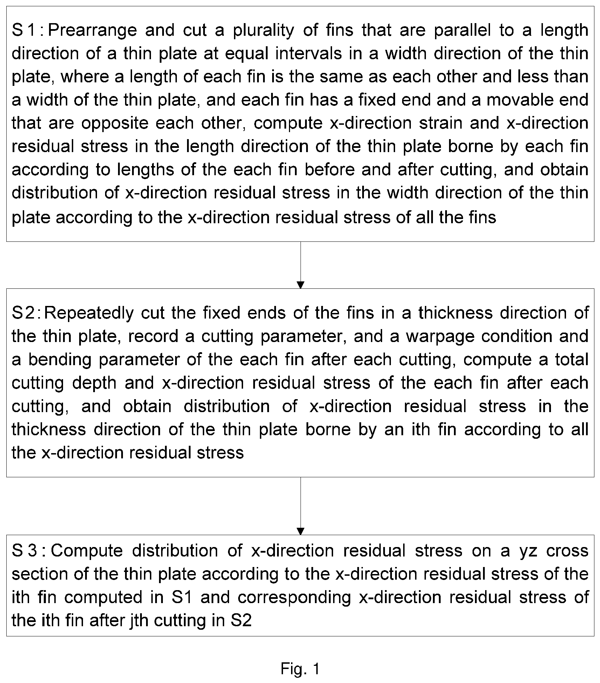

As shown in Fig. 1, an embodiment of the invention provides a method for measuring residual stress in a thin plate. The method includes: S1: prearrange and cut a plurality of fins that are parallel to a length direction of the thin plate at equal intervals along a width direction of the thin plate, where a length of each fin is the same as each other and less than a width of the thin plate, and the fins have fixed ends and movable ends that are opposite each other, compute an x-direction strain $\varepsilon_{i0}$ and an x-direction residual stress $\sigma_{i0}$ in the length direction of the thin plate borne by each fin according to lengths of each fin before and after cutting, and obtain distribution of x-direction residual stress in the width direction of the thin plate according to $\sigma_{i0}$ of all the fins; S2: repeatedly cut the fixed ends of the fins in a thickness direction of the thin plate, record a cutting parameter, and a warpage condition and a bending parameter of the each fin after each cutting, compute a total cutting depth $Z_{ij}$ and an x-direction residual stress $\sigma_{ij}$ of the each fin after each cutting, and obtain distribution of x-direction residual stress in the thickness direction of the thin plate borne by an ith fin according to all $\sigma_{ij}$; and S3: compute distribution $\sigma_x$, $\sigma_x = \sigma_{i0} + \sigma_{ij}$, of x-direction residual stress on a yz cross section of the thin plate according to $\sigma_{i0}$ of the ith fin computed in S1 and corresponding $\sigma_{ij}$ of the ith fin after jth cutting in S2.

In the embodiment, according to distribution of the plurality of x-direction residual stress in the width direction (y direction) and the thickness direction (z direction) of the thin plate, distribution of the residual stress in the thin plate on the yz cross section is obtained, and the situation that a method for evaluating residual stress in a thin plate through a single-side corrosion method in the prior art can only qualitatively determine magnitude of the residual stress, but cannot quantitatively characterize distribution of the residual stress in a thickness of the thin plate is avoided. Through computation of the solution, the residual stress magnitude and the distribution thereof in the thin plate are obtained, and characterization is accurate and reliable.

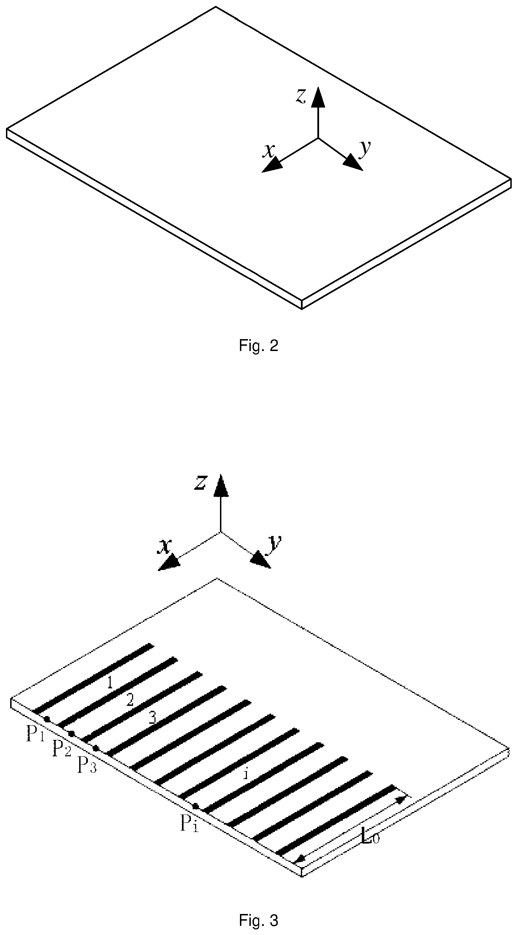

As shown in Figs. 2-4 and 8, S1 includes: S1.1: arrange cutting marks at equal intervals in the width direction of the thin plate, where an extension direction of each cutting mark is the same as each other and parallel to the length direction of the thin plate and extends to an end of the thin plate, an extension length of the each cutting mark is less than a length of the thin plate, and a region between any two cutting marks forms one fin, and record an initial length $L_0$ of the ith fin before cutting; and S1.2: cut the cutting marks through the thin plate in the thickness direction of the thin plate, and record a deformation length $L_{i0}$ of the each fin after deformation in the length direction of the thin plate.

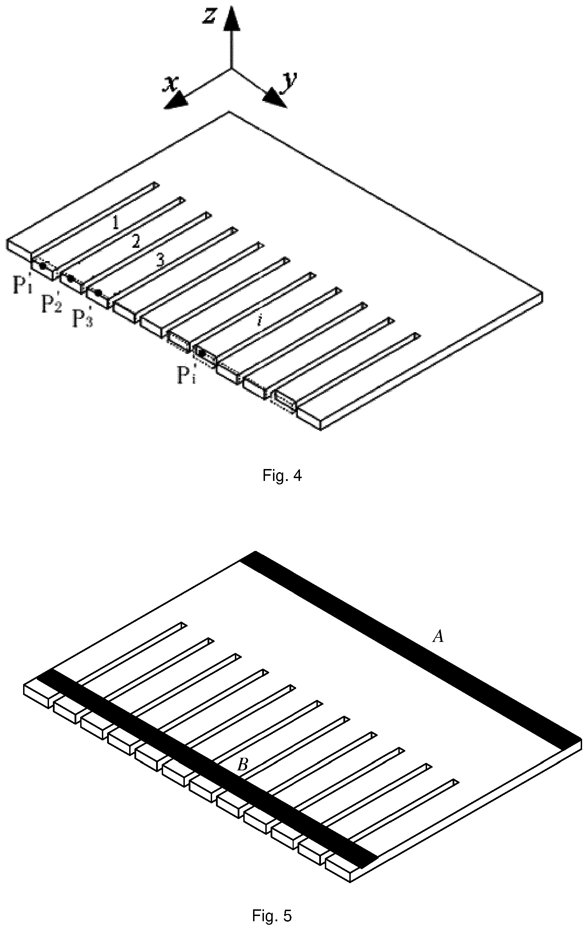

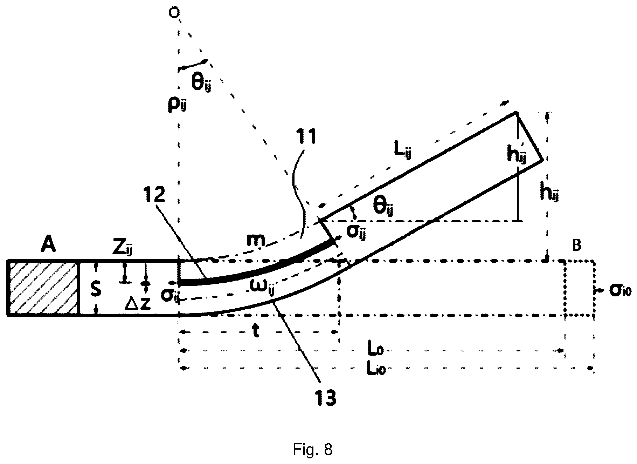

Specifically, as shown in Figs. 2 and 8, an x-direction is defined as a length direction of the thin plate and a residual stress measurement direction, a y-direction is a width direction of the thin plate, and a z-direction is a thickness direction of the thin plate. The thin plate is initially in a static balance state, and resultant force of x-direction residual stress of the thin plate is zero in the width direction (y direction) of the thin plate. In the embodiment, i = 1, 2, 3,..., 10, and specific operation processes of S1.1 and S1.2 are as follows: 11 cutting marks that extend in the length direction (x direction) of the thin plate are arranged at intervals in the width direction (y direction) of the thin plate, the plurality of cutting marks are parallel to each other and have the same length, one end of each cutting mark extends to one end of the thin plate in the length direction (x direction) of the thin plate, and the other end is located on a plane of the thin plate. A region between any two cutting marks forms one fin, and there are 10 fins in total, which are fin 1, fin 2, fin 3, fin 4,..., fins 10 in the width direction (y direction) of the thin plate. The length $L_0$ of the cutting mark is recorded, and serves as initial lengths of the 10 fins not cut. Each cutting mark is sequentially cut through the thin plate through a linear cutting method, a cutting direction is parallel to the thickness direction (z direction) of the thin plate, and 10 fins (fin 1 to fin 10, that is, 1, 2, 3,..., i in figures) are obtained. After cutting, each of the 10 fins is of a strip-shaped structure with one end fixed and the other end movable. After all the above fins are obtained through the linear cutting method, the resultant force of the residual stress borne by the fins in the thickness direction (z direction) of the thin plate is released, the 10 fins deform under the influence of the x-direction residual stress in the thin plate, and a length $L_{i0}$ of each fin after deformation is recorded. $L_0$ is less than the length of the thin plate, deformation of the fin includes elongation or shortening of the fin in the length direction of the thin plate, and $L_{i0}$ is an overall length of the ith fin after deformation, for example, $L_{10}$ is a length of the fin 1 after deformation. In the embodiment, lengths of each fin before and after cutting are generally measured by a laser displacement sensor. Specifically, before the cutting marks are cut, initial position coordinates (that is, coordinates of positions $P_1$, $P_2$, $P_3$......, $P_i$ in Fig. 3) of an end of the fin located on a side of an end of the thin plate are measured by the laser displacement sensor. After the cutting marks are cut, deformation position coordinates (that is, coordinates of positions $P_1^{'}$, $P_2^{'}$, $P_3^{'}$......, $P_i^{'}$ in Fig. 4) of the movable end (which is the same end as the end of the above fin) of the fin after deformation are measured by the laser displacement sensor. According to coordinates of $P_i^{'}$ and $P_i$, a deformation length of each fin in the length direction (x direction) of the thin plate may be obtained, and an overall length $L_{i0}$ of each fin after deformation in the length direction (x direction) of the thin plate may be obtained.

In some embodiments, S1 further includes: S1.3: compute the x-direction strain $\varepsilon_{i0}$ and the x-direction residual stress $\sigma_{i0}$, $\varepsilon_{i0} = (L_0 - L_{i0}) / L_0$ and $\sigma_{i0} = E\varepsilon_{i0}$, in the length direction of the thin plate borne by the each fin according to the recorded initial length $L_0$ of the fin and the deformation length $L_{i0}$ of the fin, where E is an elastic modulus of the thin plate. As shown in Fig. 8, in the embodiment, x-direction strain $\varepsilon_{i0}$, $\varepsilon_{i0} = (L_0 - L_{i0}) / L_0$, of each fin is computed according to the

obtained $L_{i0}$ of each fin after deformation and initial lengths $L_0$ of all fins before cutting. With fin 1 as an example, $\varepsilon_{10} = (L_0 - L_{10})/L_0$, and $\varepsilon_{i0}$ of other fins are similar. According to the obtained $\varepsilon_{10}, \varepsilon_{20}, \varepsilon_{30} ......, \varepsilon_{100}$, a distribution difference of residual stress in the width direction (y direction) of the thin plate is obtained.

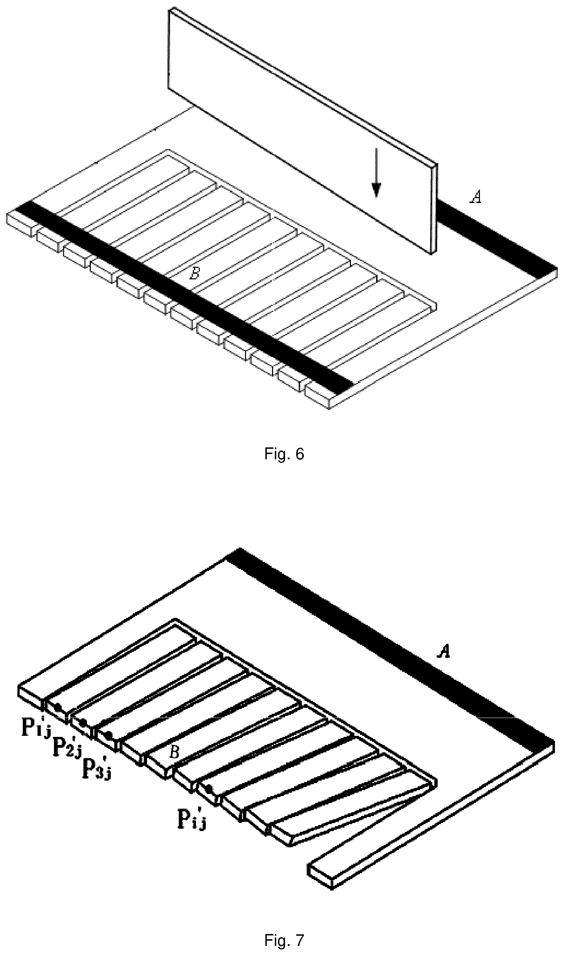

As shown in Figs. 5-8, S2 includes: constrain two ends of the thin plate in the length direction before each cutting, so as to make an extension direction of each fin parallel to the width direction of the thin plate, and release the constraint on the thin plate on one side of the movable end of the fin after each cutting, so as to compute and record the bending parameter of the ith fin after jth cutting. In the embodiment, end A and end B of the thin plate after the step S1 are fixed, so as to ensure that an initial state of each fin is the same as each other. End B is released after each cutting, so as to break balance of the residual stress in the thickness direction (z direction) of the thin plate, such that a different degree of warping deformation occurs on each fin. Bending conditions of the 10 fins in the same initial state in the case of the same cutting depth are observed, and a bending parameter of each fin after each cutting is recorded.

As shown in Fig. 8, the total cutting depth $Z_{ij}$ and the x-direction residual stress $\sigma_{ij}$ of each fin after each cutting is expressed as: $S > Z_{ij} = j\Delta z$ ; $L_{ij} = L_{i0}-t$ and $\sigma_{ij} = \dfrac{E\pi}{90m \cdot \Delta z \cdot [S-(j-1)]\Delta z}( I_{ij}\arcsin \dfrac{h'_{ij}}{L_{ij}} -I_{i(j-1)}\arcsin \dfrac{h'_{i(j-1)}}{L_{ij}} )$ ;

where $\Delta z$ is a cutting depth of each cutting, t is a cutting width, $I_{ij}$ is an inertia moment of an uncut portion of the ith fin after jth cutting, E is a Young's elastic modulus of the thin plate, $h'_{ij}$ is a warpage quantity of the ith fin after jth cutting minus a warpage quantity of a cut portion, $h_{ij}$ is a bending height of the ith fin after jth cutting, $L_{ij}$ is a remaining length of the ith fin after jth cutting, S is a thickness of the thin plate, m is an equivalent arc length of residual stress release of the ith fin after jth cutting, and under the condition that t is infinitely close to 0, a computational formula for $\sigma_{ij}$ is expressed as:

$$\sigma_{ij} = \frac{E\pi}{90m \cdot \Delta z \cdot [S-(j-1)]\Delta z}( I_{ij}\arcsin \frac{h_{ij}}{L_{ij}} -I_{i(j-1)}\arcsin \frac{h_{i(j-1)}}{L_{i(j-1)}} ) .$$

In the embodiment, cutting is carried out through an electric spark electrode discharge cutting method, a cutting direction is perpendicular to a surface of the thin plate, and ends of the fixed ends of all fins are simultaneously cut. In the cases of $L_{ij}$ and the number of times of cutting j = 0, $L_{ij}=L_{i0}$. Since a cutting width t of any fin does not change, a plurality of $L_{ij}$ of an ith fin are the same as each other. For example, $L_{11}$ of a first fin (fin 1) after first cutting is the same as $L_{12}$ of the first fin (fin 1) after second cutting. In the cases of $h_{ij}$ and j = 0, $h_{i0} = h_{ij}$. Since a total cutting depth $Z_{ij}$ of any fin progressively increases, a plurality of $h_{ij}$ of the ith fin are different from each other. For example, $h_{11}$ of the first fin (fin 1) after first cutting is different from $h_{12}$ of the first fin (fin 1) after second cutting, and $h'_{ij}$ is similar.

With fin 1 after two-time cutting as an example, a total cutting depth after second cutting is $Z_{12} = 2\Delta z$ , and residual stress of fin 1 after second cutting is $\sigma_{12} = \dfrac{E\pi}{90m \cdot \Delta z \cdot [S-(2-1)]\Delta z}( I_{12}\arcsin \dfrac{h'_{12}}{L_{12}} -I_{11}\arcsin \dfrac{h'_{11}}{L_{11}} )$ . Therefore, the residual stress of each fin after each cutting may be computed, and distribution of x-direction residual stress in the thickness direction of the thin plate borne by each fin may be obtained according to all the obtained $\sigma_{ij}$. Under the condition that t is infinitely close to 0, residual stress release is small, a bending degree is low, $h_{ij}$ approximately equals to $h'_{ij}$ , and thus $\sigma_{12} = \dfrac{E\pi}{90m \cdot \Delta z \cdot [S-(2-1)]\Delta z}( I_{12}\arcsin \dfrac{h_{12}}{L_{12}} -I_{11}\arcsin \dfrac{h_{11}}{L_{11}} )$ . Specifically, j in the embodiment is an integer greater than 0.

In some embodiments, m is approximately expressed as: $m = t + 0.75S$; after jth cutting of the ith fin, a notch 11 is formed, and the ith fin is bent to form a first bent surface 12 and a second bent surface 13 that are spaced apart from each other in the thickness direction of the thin plate; on an xz cross section of the thin plate, the first bent surface 12 and the second bent surface 13 are two arcs that have the same curvature but different arc lengths, the equivalent arc length m is a length of an arc formed between two ends of an opening of the notch 11 on the cross section, and curvature of the equivalent arc length m is the same as curvature of the two arcs; and $h'_{ij}$ is a height between a warping end of the opening of the notch 11 on the cross section and a top end of the fin after warping, and $h_{ij}$ is a height between a non-warping end of the opening of the notch 11 on the cross section and the top end of the fin after warping.

In the embodiment, $h_{ij}$ may be also obtained by a laser displacement sensor. Specifically, coordinates of positions $P'_1$ , $P'_2$ , $P'_3$ ......, $P'_i$ in Fig. 4 serve as the standard, and the movable ends of all the fins are re-measured after each cutting. With one-time cutting as an example (that is, in the case of j = 1), coordinates of positions

$P'_{11}$, $P'_{21}$, $P'_{31}$ ......, $P'_{i1}$ are obtained. Similarly, in the case of two-time cutting (j = 2), coordinates of positions

$P'_{12}$, $P'_{22}$, $P'_{32}$ ......, $P'_{i2}$ are obtained. By comparing coordinates of $P'_i$ and $P'_{ij}$ before and after cutting, $h_{ij}$ and

other relevant parameters may be obtained. Alternatively, $h'_{ij}$ may be obtained by a laser displacement sensor, and a measurement method is the same as that for $h_{ij}$.

In the embodiment, the $\sigma_{ij}$ is obtained according to formulas as follows:

$$d(\Sigma M_{ij}) = \sigma_{ij} \cdot \Delta z \cdot m \frac{\left[ S - (j-1)\Delta z \right]}{2} \quad ; \text{ and } \quad d(\Sigma M_{ij}) = \frac{E\pi}{180}( I_{ij}\arcsin \frac{h'_{ij}}{L_{ij}} - I_{i(j-1)}\arcsin \frac{h'_{i(j-1)}}{L_{ij}}) \quad ;$$

where $\Sigma M_{ij}$ is a total bending moment of the ith fin after jth cutting, and $d( \Sigma M_{ij})$ is a bending moment increment of the ith fin after jth cutting. $d( \Sigma M_{ij}) = \Sigma M_{ij} - \Sigma M_{i(j-1)}$.

Specifically, a computational method for $\Sigma M_{ij}$ is as follows: $\Sigma M_{ij} = \omega_{ij} M_{ij}$ ; wherein $\omega_{ij}$ is an average arc length, and $M_{ij}$ is an average bending moment of the residual stress of the ith fin after jth cutting on an arc length of any unit; and after j-th cutting, the i-th fin is bent to form a first bent surface 12 and a second bent surface 13 that are spaced apart from each other in the thickness direction of the thin plate, on an xz cross section of the thin plate, the first bent surface 12 and the second bent surface 13 are two arcs that have the same curvature but different arc lengths, the average arc length is between the two arcs, curvature of the average arc length is the same as curvature of the two arcs, and distances between the average arc length and the arcs on two sides are the same.

Wherein, a computational method for $M_{ij}$ is as follows: $M_{ij} = \frac{EI_{ij}\pi}{180\omega_{ij}}\arcsin \frac{h'_{ij}}{L_{ij}}$ . With fin 1 after two-time cutting as an example, $M_{12}$ is as follows: $M_{12} = \frac{EI_{12}\pi}{180\omega_{12}}\arcsin \frac{h'_{12}}{L_{12}}$ .

According to $\Sigma M_{ij} = \omega_{ij} M_{ij}$, it can be inferred that $\Sigma M_{ij} = \frac{EI_{ij}\pi}{180}\arcsin \frac{h'_{ij}}{L_{ij}}$ . With fin 1 after two-time cutting as

an example, $\Sigma M_{ij}$ is as follows: $\Sigma M_{12} = \frac{EI_{12}\pi}{180}\arcsin \frac{h'_{12}}{L_{12}}$ .

Further, a computational method for $\omega_{ij}$ is as follows: $\theta_{ij} = \frac{\omega_{ij}}{\rho_{ij}} \cdot \frac{180}{\pi}$ ; wherein $\rho_{ij}$ is a curvature radius of the ith fin after jth cutting, and $\theta_{ij}$ is a bending angle of the ith fin after jth cutting.

In the embodiment, with fin 1 after two-time cutting as an example, $\theta_{12} = \frac{\omega_{12}}{\rho_{12}} \cdot \frac{180}{\pi}$ . Alternatively, $\rho_{ij}$ may be also obtained by a laser displacement sensor, and a measurement method is the same as that for $h_{ij}$ .

A computational method for $\theta_{ij}$ is as follows: $\theta_{ij} = \arcsin \frac{h'_{ij}}{L_{ij}}$ . With fin 1 after two-time cutting as an example,

$\theta_{12} = \arcsin \frac{h'_{12}}{L_{12}}$ .

Further, a computational method for $I_{ij}$ is as follows: $\frac{1}{\rho_{ij}} = \frac{M_{ij}}{EI_{ij}}$ ; wherein $\rho_{ij}$ is a curvature radius of the ith fin after jth cutting, and $M_{ij}$ is a bending moment of the ith fin after jth cutting. With fin 1 after two-time cutting as an example,

$\frac{1}{\rho_{12}} = \frac{M_{12}}{EI_{12}}$ .

In the embodiment, S2 further includes: correct the residual stress; $\Delta(\sigma_{ij}) = \dfrac{\sigma_{ij} \cdot \Delta z}{S - j\Delta z}$ ; and

$\sigma'_{ij} = \sigma_{ij} - \Sigma_1^{j-1}\Delta\sigma_{ij}$ ; wherein $\Delta(\sigma_{ij})$ is an effect of residual stress of layer $\Delta z$ on residual stress of the uncut portion,

and $\sigma'_{ij}$ is a residual stress correction value of the ith fin during jth cutting. Through such arrangement, distribution reliability of residual stress $\sigma_{ij}$ on the thin plate and characterization accuracy are ensured.

## Claims

1. A method for measuring residual stress in a thin plate, comprising:

   S1: prearranging and cutting a plurality of fins that are parallel to a length direction (x-direction) of the thir plate at equal intervals along a width (y- direction) of the thin plate, wherein a length of each fin is the same as each other and less than a width of the thin plate, and each fin has a fixed end and a movable end that are opposite each other, computing an x-direction strain $\varepsilon_{i0}$ and an x-direction residual stress $\sigma_{i0}$ in the length direction of the thin plate borne by each fin according to lengths of each fin before and after cutting, and obtaining distribution of x-direction residual stress in the width direction of the thin plate according to x-direction residual stress $\sigma_{i0}$ of all the fins;
   S2: repeatedly cutting the fixed end of each fin in a thickness direction (z- direction) of the thin plate, recording a cutting parameter, and a warpage condition and a bending parameter of each fir after each cutting, computing a total cutting depth $Z_{ij}$ and x-direction residual stress $\sigma_{ij}$ of each fin after each cutting, and obtaining distribution of x-direction residual stress in the thickness direction of the thin plate borne by an ith fin according to all $\sigma_{ij}$ ; and
   S3: computing distribution $\sigma_x$, $\sigma_x = \sigma_{i0} + \sigma_{ij}$, of x-direction residual stress on a yz cross section of the thin plate according to $\sigma_{i0}$ of the ith fin computed in S1 and corresponding $\sigma_{ij}$ of the ith fin after jth cutting in S2.

2. The method for measuring residual stress in the thin plate according to claim 1, wherein S1 comprises:

   S1.1: arranging cutting marks at equal intervals in the width direction of the thin plate, wherein an extension direction of each cutting mark is the same as each other and parallel to the length direction of the thin plate and extends to an end of the thin plate, an extension length of each cutting mark is less than a length of the thin plate, and a region between any two cutting marks forms one fin, and recording an initial length $L_0$ of the ith fin before cutting; and
   S1.2: cutting the cutting marks through the thin plate in a thickness direction of the thin plate, and recording a deformation length $L_{i0}$ of each fin after deformation in the length direction of the thin plate.

3. The method for measuring residual stress in the thin plate according to claim 2, wherein S1 further comprises:
   S1.3: computing the x-direction strain $\varepsilon_{i0}$ and the x-direction residual stress $\sigma_{i0}$, $\varepsilon_{i0} = (L_0 - L_{i0})/L_0$ and $\sigma_{i0} = E\varepsilon_{i0}$, in the length direction of the thin plate borne by each fir according to the recorded initial length $L_0$ of each fin and the deformation length $L_{i0}$ of the fin, wherein E is an elastic modulus of the thin plate.

4. The method for measuring residual stress in the thin plate according to claim 1, wherein S2 comprises:
   constraining two ends of the thin plate in the length direction before each cutting, so as to make an extension direction of each fin parallel to the width direction of the thin plate, and releasing the thin plate on a side of the movable end of each fin after each cutting, so as to compute and record the bending parameter of the ith fin after jth cutting.

5. The method for measuring residual stress in the thin plate according to claim 4, wherein the total cutting depth $Z_{ij}$ and the x-direction residual stress $\sigma_{ij}$ of each fin after each cutting are expressed as:

$$S > Z_{ij} = j\Delta z ;$$

$$L_{ij} = L_{i0} - t ;$$

and

$$\sigma_{ij} = \frac{E\pi}{90\mathrm{m}\cdot\Delta z\cdot\left[S-\left(j\text{-}1\right)\right]\Delta z}\left( I_{ij}\arcsin\frac{h_{ij}'}{L_{ij}}-I_{i(j\text{-}1)}\arcsin\frac{h_{i(j\text{-}1)}'}{L_{ij}}\right);$$

wherein

$\Delta z$ is a cutting depth of each cutting, t is a cutting width, $I_{ij}$ is inertia moment of an uncut portion of the ith fin after jth cutting, E is a Young's elastic modulus of the thin plate, $h_{ij}'$ is a warpage quantity of the ith fin after jth cutting minus a warpage quantity of a cut portion, $h_{ij}$ is a bending height of the ith fin after jth cutting, $L_{ij}$ is a remaining length of the ith fin after jth cutting, S is a thickness of the thin plate, m is an equivalent arc length of residual stress release of the ith fin after jth cutting, and
under a condition that t is infinitely close to 0, a computational formula for $\sigma_{ij}$ is expressed as:

$$\sigma_{ij} = \frac{E\pi}{90\mathrm{m}\cdot\Delta z\cdot\left[S-\left(j\text{-}1\right)\right]\Delta z}\left( I_{ij}\arcsin\frac{h_{ij}}{L_{ij}}-I_{i(j\text{-}1)}\arcsin\frac{h_{i(j\text{-}1)}}{L_{i(j\text{-}1)}}\right).$$

6.  The method for measuring residual stress in the thin plate according to claim 5, wherein m is approximately expressed as: $m = t + 0.75S$; after jth cutting of the ith fin, a notch (11) is formed, and the ith fin is bent to form a first bent surface (12) and a second bent surface (13) that are spaced apart from each other in the thickness direction of the thin plate; on an xz cross section of the thin plate, the first bent surface (12) and the second bent surface (13) are two arcs that have the same curvature but different arc lengths, the equivalent arc length m is a length of an arc formed between two ends of an opening of the notch (11) on the cross section, and curvature of the equivalent arc length m is the same as curvature of the two arcs; and $h_{ij}'$ is a height between a warping end of the opening of the notch (11) on the cross section and a top end of a corresponding fin after warping, and $h_{ij}$ is a height between a non-warping end of the opening of the notch (11) on the cross section and the top end of the fin after warping.

7.  The method for measuring residual stress in the thin plate according to claim 5, wherein $\sigma_{ij}$ is obtained according to formulas as follows:

$$\mathrm{d}(\Sigma M_{ij}) = \sigma_{ij}\cdot\Delta z\cdot\mathrm{m}\frac{\left[S-\left(j\text{-}1\right)\Delta z\right]}{2};$$

and

$$\mathrm{d}(\Sigma M_{ij}) = \frac{E\pi}{180}\left( I_{ij}\arcsin\frac{h_{ij}'}{L_{ij}}-I_{i(j\text{-}1)}\arcsin\frac{h_{i(j\text{-}1)}'}{L_{ij}}\right);$$

wherein
$\Sigma M_{ij}$ is a total bending moment of the ith fin after jth cutting, and d($\Sigma M_{ij}$) is a bending moment increment of the ith fin after jth cutting.

8.  The method for measuring residual stress in the thin plate according to claim 7, wherein a computational method for $\Sigma M_{ij}$ is as follows:

$$\Sigma M_{ij} = \omega_{ij}M_{ij};$$

wherein
$\omega_{ij}$ is an average arc length, and $M_{ij}$ is average bending moment of residual stress of the ith fin after jth cutting on an arc length of any unit; and after jth cutting, the i-th fin is bent to form a first bent surface (12) and a second bent surface (13) that are spaced apart from each other in the thickness direction of the thin plate, on an xz cross section of the thin plate, the first bent surface (12) and the second bent surface (13) are two arcs that have the same curvature but different arc lengths, the average arc length is between the two arcs, curvature of the average arc length is the same as curvature of the two arcs, and distances between the average arc length and the arcs on two sides are the same.

9. The method for measuring residual stress in the thin plate according to claim 8, wherein a computational method for $M_{ij}$ is as follows:

$$M_{ij} = \frac{EI_{ij}\pi}{180\omega_{ij}} \arcsin\frac{h'_{ij}}{L_{ij}} \cdot$$

10. The method for measuring residual stress in the thin plate according to claim 9, wherein computational methods for $\omega_{ij}$, $\theta_{ij}$; and $I_{ij}$ are as follows:

$$\theta_{ij} = \frac{\omega_{ij}}{\rho_{ij}} \cdot \frac{180}{\pi};$$

$$\theta_{ij} = \arcsin\frac{h'_{ij}}{L_{ij}};$$

and

$$\frac{1}{\rho_{ij}} = \frac{M_{ij}}{EI_{ij}};$$

wherein
$\rho_{ij}$ is a curvature radius of the ith fin after jth cutting, and $\theta_{ij}$ is a bending angle of the ith fin after jth cutting.

11. The method for measuring residual stress in the thin plate according to claim 10, wherein S2 further comprises: correcting the residual stress;

$$\Delta(\sigma_{ij}) = \frac{\sigma_{ij} \cdot \Delta z}{S - j\Delta z};$$

and

$\sigma'_{ij} = \sigma_{ij} - \Sigma_1^{j-1}\Delta\sigma_{ij}$ ; wherein $\Delta(\sigma_{ij})$ is an effect of residual stress of layer $\Delta z$ on residual stress of the uncut portion,

and $\sigma'_{ij}$ is a residual stress correction value of the ith fin during jth cutting.

**Patentansprüche**

1. Verfahren zum Messen von Eigenspannung in einer dünnen Platte, umfassend:

S1: Voranordnen und Zuschneiden einer Vielzahl von Rippen, die parallel zu einer Längsrichtung (x-Richtung) der dünnen Platte in gleichen Abständen entlang ihrer Breite (y-Richtung) der dünnen Platte verlaufen, wobei eine Länge jeder Rippe gleich ist und kleiner als eine Breite der dünnen Platte ist und jede Rippe ein festes Ende und ein bewegliches Ende aufweist, die einander gegenüberliegen, Berechnen der Dehnung in x-Richtung $\varepsilon_{i0}$ und einer Eigenspannung in x-Richtung $\sigma_{i0}$ in der Längsrichtung der dünnen Platte, die von jeder Rippe ertragen werden, gemäß den Längen jeder Rippe vor und nach dem Schneiden, und Erhalten der Verteilung der Eigenspannung in x-Richtung in der Breitenrichtung der dünnen Platte gemäß der Eigenspannung in x-Richtung $\sigma_{i0}$ aller Rippen;

S2: wiederholtes Zuschneiden des festen Endes jeder Rippe in einer Dickenrichtung (z-Richtung) der dünnen Platte,

Aufzeichnen der Schnittparameter, und eines Verzugszustands und der Biegeparameter jeder Rippe nach jedem Schnitt, Berechnen einer gesamten Schnitttiefe $Z_{ij}$ und der Eigenspannung in x-Richtung $\sigma_{ij}$ von jeder Rippe nach jedem Schnitt, und Erhalten der Verteilung der Eigenspannung in x-Richtung in der Dickenrichtung der dünnen Platte, die von einer i-ten Rippe ertragen wird, gemäß allen $\sigma_{ij}$ ; und

S3: Berechnen der Verteilung $\sigma_x$, $\sigma_x = \sigma_{i0} + \sigma_{ij}$, der Eigenspannung in x-Richtung auf einem yz-Querschnitt der dünnen Platte gemäß $\sigma_{i0}$ der i-ten in S1 berechneten Rippe und der entsprechenden $\sigma_{ij}$ der i-ten Rippe nach dem j-ten Schnitt in S2.

2. Verfahren zum Messen von Eigenspannung in der dünnen Platte nach Anspruch 1, wobei S1 umfasst:

S1.1: Anordnen von Schnittmarkierungen in gleichen Abständen in der Breitenrichtung der dünnen Platte, wobei eine Erstreckungsrichtung jeder Schnittmarkierung gleich ist und parallel zur Längsrichtung der dünnen Platte verläuft und sich bis zu einem Ende der dünnen Platte erstreckt, eine Erstreckungslänge jeder Schnittmarkierung kleiner als eine Länge der dünnen Platte ist und ein Bereich zwischen je zwei Schnittmarkierungen eine Rippe bildet, und Aufzeichnen einer Anfangslänge $L_0$ der i-ten Rippe vor dem Schneiden; und

S1.2: Schneiden der Schnittmarkierungen durch die dünne Platte in einer Dickenrichtung der dünnen Platte, und Aufzeichnen einer Verformungslänge $L_{i0}$ jeder einzelnen Rippe nach Verformung der dünnen Platte in der Längsrichtung.

3. Verfahren zum Messen von Eigenspannung in der dünnen Platte nach Anspruch 2, wobei S1 ferner umfasst:

S1.3: Berechnen der Dehnung in x-Richtung $\varepsilon_{i0}$ und der Eigenspannung in x-Richtung $\sigma_{i0}$ , $\varepsilon_{i0} = (L_0 - L_{i0}) / L_0$ und $\sigma_{i0} = E\varepsilon_{i0}$, in der Längsrichtung der dünnen Platte, die von jeder Rippe ertragen werden, gemäß der aufgezeichneten Anfangslänge $L_0$ von jeder Rippe und der Verformungslänge $L_{i0}$ der Rippe, wobei E der Elastizitätsmodul der dünnen Platte ist.

4. Verfahren zum Messen von Eigenspannung in der dünnen Platte nach Anspruch 1, wobei S2 umfasst:

Fixieren der beiden Enden der dünnen Platte in der Längsrichtung vor jedem Schnitt, um eine Erstreckungsrichtung jeder Rippe parallel zur Breitenrichtung der dünnen Platte herzustellen, und Lösen der dünnen Platte an einer Seite des beweglichen Endes jeder Rippe nach dem Schnitt, um den Biegeparameter der i-ten Rippe nach dem j-ten Schnitt zu berechnen und aufzuzeichnen.

5. Verfahren zum Messen von Eigenspannung in der dünnen Platte nach Anspruch 4, wobei die Gesamtschnitttiefe $Z_{ij}$ und die Eigenspannung in x-Richtung $\sigma_{ij}$ jeder Rippe nach jedem Schnitt ausgedrückt werden als:

$$S > Z_{ij} = j\Delta z$$ ;

$$L_{ij} = L_{i0} - t$$ ;

und

$$\sigma_{ij} = \frac{E\pi}{90m \cdot \Delta z \cdot \left[ S - (j-1) \right] \Delta z} \left( I_{ij} \arcsin \frac{h'_{ij}}{L_{ij}} - I_{i(j-1)} \arcsin \frac{h'_{i(j-1)}}{L_{ij}} \right)$$ ;

wobei

$\Delta z$ eine Schnitttiefe jedes Schnitts ist, t eine Schnittbreite ist, $I_{ij}$ das Trägheitsmoment eines ungeschnittenen Abschnitts der i-ten Rippe nach dem j-ten Schnitt ist, E der Elastizitätsmodul der dünnen Platte ist, $h'_{ij}$ die Verzugsmenge der i-ten Rippe nach dem j-ten Schnitt minus der Verzugsmenge des abgeschnittenen Abschnitts ist, $h_{ij}$ eine Biegehöhe der i-ten Rippe nach dem j-ten Schnitt ist, $L_{ij}$ die verbleibende Länge der i-ten Rippe nach dem j-ten Schnitt ist, S eine Dicke der dünnen Platte ist, m die äquivalente Bogenlänge der Eigenspannungsfreisetzung der i-ten Rippe nach dem j-ten Schnitt ist, und

unter einer Bedingung, dass t unendlich nahe bei 0 liegt, eine Berechnungsformel für $\sigma_{ij}$ ausgedrückt wird als:

$$\sigma_{ij} = \frac{E\pi}{90\mathrm{m} \cdot \Delta z \cdot \left[S-(j-1)\right]\Delta z}\left( I_{ij}\arcsin\frac{\mathrm{h}_{ij}}{\mathrm{L}_{ij}} - I_{i(j-1)}\arcsin\frac{\mathrm{h}_{i(j-1)}}{\mathrm{L}_{i(j-1)}}\right).$$

6. Verfahren zum Messen von Eigenspannung in der dünnen Platte nach Anspruch 5, wobei m näherungsweise ausgedrückt wird als: m = t + 0,75S; nach dem j-ten Schnitt der i-ten Rippe eine Kerbe (11) gebildet wird, und die i-te Rippe gebogen wird, um eine erste gebogene Oberfläche (12) und eine zweite gebogene Oberfläche (13) zu bilden, die in der Dickenrichtung der dünnen Platte voneinander beabstandet sind; auf einem xz-Querschnitt der dünnen Platte die erste gebogene Oberfläche (12) und die zweite gebogene Oberfläche (13) zwei Bögen mit der gleichen Krümmung, aber unterschiedlichen Bogenlängen sind, die äquivalente Bogenlänge m eine Länge eines Bogens ist, der zwischen den beiden Enden einer Öffnung der Kerbe (11) auf dem Querschnitt gebildet wird, und die Krümmung der äquivalenten Bogenlänge m gleich der Krümmung der beiden Bögen ist; und $\mathrm{h}'_{ij}$ eine Höhe zwischen einem verformten Ende der Öffnung der Kerbe (11) auf dem Querschnitt und dem oberen Ende einer entsprechenden Rippe nach der Verformung ist, und $\mathrm{h}_{ij}$ eine Höhe zwischen dem nicht verformten Ende der Öffnung der Kerbe (11) auf dem Querschnitt und dem oberen Ende der Rippe nach der Verformung ist.

7. Verfahren zum Messen von Eigenspannung in der dünnen Platte nach Anspruch 5, wobei $\sigma_{ij}$ gemäß den folgenden Formeln erhalten wird:

$$\mathrm{d}(\Sigma M_{ij}) = \sigma_{ij} \cdot \Delta z \cdot \mathrm{m}\,\frac{\left[S-(j-1)\Delta z\right]}{2};$$

und

$$\mathrm{d}(\Sigma M_{ij}) = \frac{E\pi}{180}\left( I_{ij}\arcsin\frac{\mathrm{h}'_{ij}}{\mathrm{L}_{ij}} - I_{i(j-1)}\arcsin\frac{\mathrm{h}'_{i(j-1)}}{\mathrm{L}_{ij}}\right);$$

wobei
$\Sigma M_{ij}$ das gesamte Biegemoment der i-ten Rippe nach dem j-ten Schnitt ist, und d($\Sigma M_{ij}$) die Inkrementierung des Biegemoments der i-ten Rippe nach dem j-ten Schnitt ist.

8. Verfahren zum Messen von Eigenspannung in der dünnen Platte nach Anspruch 7, wobei ein Berechnungsverfahren für $\Sigma M_{ij}$ wie folgt ist:

$$\Sigma M_{ij} = \omega_{ij} M_{ij};$$

wobei
$\omega_{ij}$ eine mittlere Bogenlänge ist, und $M_{ij}$ das mittlere Biegemoment der Eigenspannung der i-ten Rippe nach dem j-ten Schnitt auf einer Bogenlänge einer beliebigen Einheit ist; und nach dem j-ten Schnitt die i-te Rippe gebogen wird, um eine erste gebogene Oberfläche (12) und eine zweite gebogene Oberfläche (13) zu bilden, die in der Dickenrichtung der dünnen Platte voneinander beabstandet sind, auf einem xz-Querschnitt der dünnen Platte die erste gebogene Oberfläche (12) und die zweite gebogene Oberfläche (13) zwei Kreisbögen mit gleicher Krümmung, aber unterschiedlichen Bogenlängen sind, die mittlere Bogenlänge zwischen den beiden Bögen liegt, die Krümmung der mittleren Bogenlänge der Krümmung der beiden Bögen entspricht, und die Abstände zwischen der mittleren Bogenlänge und den Bögen auf beiden Seiten gleich sind.

9. Verfahren zum Messen von Eigenspannung in der dünnen Platte nach Anspruch 8, wobei ein Berechnungsverfahren für $M_{ij}$ wie folgt ist:

$$M_{ij} = \frac{EI_{ij}\pi}{180\omega_{ij}} \arcsin \frac{h'_{ij}}{L_{ij}}.$$

**10.** Verfahren zum Messen von Eigenspannung in der dünnen Platte nach Anspruch 9, wobei Berechnungsverfahren für $\omega_{ij}, \theta_{ij}$ und $l_{ij}$ wie folgt sind:

$$\theta_{ij} = \frac{\omega_{ij}}{\rho_{ij}} \cdot \frac{180}{\pi};$$

$$\theta_{ij} = \arcsin \frac{h'_{ij}}{L_{ij}};$$

und

$$\frac{1}{\rho_{ij}} = \frac{M_{ij}}{EI_{ij}};$$

wobei
$\rho_{ij}$ ein Krümmungsradius der i-ten Rippe nach dem j-ten Schnitt ist, und $\theta_{ij}$ ein Biegewinkel der i-ten Rippe nach dem j-ten Schnitt ist.

**11.** Verfahren zum Messen von Eigenspannung in der dünnen Platte nach Anspruch 10, wobei S2 ferner umfasst: Korrigieren der Eigenspannung;

$$\Delta(\sigma_{ij}) = \frac{\sigma_{ij} \cdot \Delta z}{S - j\Delta z};$$

und

$\sigma'_{ij} = \sigma_{ij} - \Sigma_1^{j-1} \Delta\sigma_{ij}$ ; wobei $\Delta(\sigma_{ij})$ eine Folge der Eigenspannung der Schicht $\Delta z$ auf die Eigenspannung des ungeschnittenen Abschnitts ist, und $\sigma'_{ij}$ ein Eigenspannungskorrekturwert der i-ten Rippe während des j-ten Schnitts ist.

**Revendications**

**1.** Procédé permettant de mesurer une contrainte résiduelle dans une plaque mince, comprenant :

S1 : le pré-agencement et la découpe d'une pluralité d'ailettes parallèles au niveau d'une direction de longueur (direction x) de la plaque mince à intervalles égaux le long d'une largeur (direction y) de la plaque mince, dans lequel une longueur de chaque ailette est identique à celles des autres et inférieure à une largeur de la plaque mince, et chaque ailette présente une extrémité fixe et une extrémité mobile qui sont opposées l'une à l'autre, le calcul d'un allongement dans la direction x $\varepsilon_{i0}$ et d'une contrainte résiduelle dans la direction x $\sigma_{i0}$ dans la direction de longueur de la plaque mince portée par chaque ailette selon les longueurs de chaque ailette avant et après la découpe, et l'obtention de la distribution de la contrainte résiduelle dans la direction x dans la direction de largeur de la plaque mince selon la contrainte résiduelle dans la direction x $\sigma_{i0}$ de toutes les ailettes ;
S2 : la découpe répétée de l'extrémité fixe de chaque ailette dans une direction d'épaisseur (direction z) de la plaque mince,
l'enregistrement d'un paramètre de découpe, d'un état de gauchissement et d'un paramètre de flexion de chaque ailette après chaque découpe, le calcul d'une profondeur de découpe totale $Z_{ij}$ et d'une contrainte résiduelle dans la direction x $\sigma_{ij}$ de chaque ailette après chaque découpe, et l'obtention de la distribution de la contrainte résiduelle dans la direction x dans la direction d'épaisseur de la plaque mince portée par une iième ailette selon toutes les directions $\sigma_{ij}$ ; et

S3 : le calcul de la distribution $\sigma_x$, $\sigma_x = \sigma_{i0} + \sigma_{ij}$, de la contrainte résiduelle dans la direction x sur une section transversale yz de la plaque mince selon $\sigma_{i0}$ de la iième ailette calculée en S1 et $\sigma_{ij}$ correspondante de la iième ailette après la jième découpe en S2.

2. Procédé permettant de mesurer une contrainte résiduelle dans la plaque mince selon la revendication 1, dans lequel S1 comprend :

S1.1 : l'agencement des marques de découpe à intervalles égaux dans la direction de largeur de la plaque mince, dans lequel une direction d'extension de chaque marque de découpe est identique à celle des autres et parallèle à la direction de longueur de la plaque mince et s'étend jusqu'à une extrémité de la plaque mince, une longueur d'extension de chaque marque de découpe est inférieure à une longueur de la plaque mince, et une région entre deux marques de découpe quelconques forme une ailette, et l'enregistrement d'une longueur initiale $L_0$ de la iième ailette avant la découpe ; et

S1.2 : la découpe des marques de découpe à travers la plaque mince dans une direction d'épaisseur de la plaque mince et l'enregistrement d'une longueur de déformation $L_{i0}$ de chaque ailette après déformation dans la direction de longueur de la plaque mince.

3. Procédé permettant de mesurer la contrainte résiduelle dans la plaque mince selon la revendication 2, dans lequel S1 comprend en outre :

S1.3 : le calcul de l'allongement dans la direction x $\varepsilon_{i0}$ et de la contrainte résiduelle dans la direction x $\sigma_{i0}$, $\varepsilon_{i0} = (L_0 - L_{i0})/L_0$ et $\sigma_{i0} = E\varepsilon_{i0}$, dans la direction de longueur de la plaque mince portée par chaque ailette selon la longueur initiale enregistrée $L_0$ de chaque ailette et de la longueur de déformation $L_{i0}$ de l'ailette, dans lequel E est un module d'élasticité de la plaque mince.

4. Procédé permettant de mesurer une contrainte résiduelle dans la plaque mince selon la revendication 1, dans lequel S2 comprend :

la contrainte de deux extrémités de la plaque mince dans la direction de longueur avant chaque découpe, de manière à rendre une direction d'extension de chaque ailette parallèle à la direction de largeur de la plaque mince, et la libération de la plaque mince d'un côté de l'extrémité mobile de chaque ailette après chaque découpe, de manière à calculer et à enregistrer le paramètre de flexion de la iième ailette après la jième découpe.

5. Procédé permettant de mesurer une contrainte résiduelle dans la plaque mince selon la revendication 4, dans lequel la profondeur de découpe totale $Z_{ij}$ et la contrainte résiduelle dans la direction x $\sigma_{ij}$ de chaque ailette après chaque découpe sont exprimées comme suit :

$$S > Z_{ij} = j\Delta z \quad ;$$

$$L_{ij} = L_{i0} - t \quad ;$$

et

$$\sigma_{ij} = \frac{E\pi}{90m \cdot \Delta z \cdot \left[S - (j-1)\right]\Delta z}\left( I_{ij}\arcsin\frac{h'_{ij}}{L_{ij}} - I_{i(j-1)}\arcsin\frac{h'_{i(j-1)}}{L_{ij}} \right) \quad ;$$

dans lequel

$\Delta z$ est la profondeur de découpe de chaque découpe, t est une largeur de découpe, $I_{ij}$ est le moment d'inertie d'une partie non découpée de la iième ailette après la jième découpe, E est un module d'élasticité de Young de la plaque mince, $h'_{ij}$ est une quantité de gauchissement de la iième ailette après la jième découpe moins une quantité de gauchissement d'une partie découpée, $h_{ij}$ est une hauteur de flexion de la iième ailette après la jième découpe, $L_{ij}$ est une longueur restante de la iième ailette après la jième découpe, S est une épaisseur de la plaque mince, m est une longueur d'arc équivalente de libération de contrainte résiduelle de la iième ailette après la jième découpe, et

sous une condition que t soit infiniment proche de 0, une formule de calcul pour $\sigma_{ij}$ est exprimée comme suit :

$$\sigma_{ij} = \frac{E\pi}{90m \cdot \Delta z \cdot \left[ S - (j\text{-}1) \right] \Delta z}\left( I_{ij} \arcsin \frac{h_{ij}}{L_{ij}} - I_{i(j\text{-}1)} \arcsin \frac{h_{i(j\text{-}1)}}{L_{i(j\text{-}1)}} \right).$$

6. Procédé permettant de mesurer une contrainte résiduelle dans la plaque mince selon la revendication 5, dans lequel m est approximativement exprimé comme suit : m = t + 0,75S ; après la jième découpe de la iième ailette, une encoche (11) est formée, et la iième ailette est pliée pour former une première surface pliée (12) et une seconde surface pliée (13) qui sont espacées l'une de l'autre dans la direction d'épaisseur de la plaque mince ; sur une découpe transversale xz de la plaque mince, la première surface pliée (12) et la seconde surface pliée (13) sont deux arcs qui présentent la même courbure mais des longueurs d'arc différentes, la longueur d'arc équivalente m est une longueur d'un arc formé entre deux extrémités d'une ouverture de l'encoche (11) sur la coupe transversale, et la courbure de la longueur d'arc équivalente m est la même que la courbure des deux arcs ; et $h'_{ij}$ est une hauteur entre une extrémité de gauchissement de l'ouverture de l'encoche (11) sur la section transversale et une extrémité supérieure d'une ailette correspondante après gauchissement, et $h_{ij}$ est une hauteur entre une extrémité de non gauchissement de l'ouverture de l'encoche (11) sur la section transversale et l'extrémité supérieure de l'ailette après gauchissement.

7. Procédé permettant de mesurer une contrainte résiduelle dans la plaque mince selon la revendication 5, dans lequel $\sigma_{ij}$ est obtenu selon les formules comme suit :

$$d(\Sigma M_{ij}) = \sigma_{ij} \cdot \Delta z \cdot m \frac{\left[ S - (j\text{-}1)\Delta z \right]}{2} ;$$

et

$$d(\Sigma M_{ij}) = \frac{E\pi}{180}\left( I_{ij} \arcsin \frac{h'_{ij}}{L_{ij}} - I_{i(j\text{-}1)} \arcsin \frac{h'_{i(j\text{-}1)}}{L_{ij}} \right) ;$$

dans lequel
$\Sigma M_{ij}$ est le moment de flexion totale de la iième ailette après la jième découpe, et d($\Sigma M_{ij}$) est l'augmentation du moment de flexion de la iième ailette après la jième découpe.

8. Procédé permettant de mesurer une contrainte résiduelle dans une plaque mince selon la revendication 7, dans lequel un procédé de calcul pour $\Sigma M_{ij}$ est comme suit :

$$\Sigma M_{ij} = \omega_{ij} M_{ij} ;$$

dans lequel
$\omega_{ij}$ est une longueur d'arc moyenne, et $M_{ij}$ est le moment de flexion moyen de la contrainte résiduelle de la ième ailette après la jième découpe sur une longueur d'arc d'une unité quelconque ; et après la jième découpe, la iième ailette est pliée pour former une première surface pliée (12) et une seconde surface pliée (13) qui sont espacées l'une de l'autre dans la direction d'épaisseur de la plaque mince, sur une coupe transversale xz de la plaque mince, la première surface pliée (12) et la seconde surface pliée (13) sont deux arcs qui présentent la même courbure mais des longueurs d'arc différentes, la longueur d'arc moyenne se situe entre les deux arcs, la courbure de la longueur d'arc moyenne est la même que la courbure des deux arcs, et les distances entre la longueur d'arc moyenne et les arcs sur deux côtés sont les mêmes.

9. Procédé permettant de mesurer une contrainte résiduelle dans une plaque mince selon la revendication 8, dans lequel un procédé de calcul pour $M_{ij}$ est comme suit :

$$M_{ij} = \frac{EI_{ij}\pi}{180\omega_{ij}} \arcsin \frac{h'_{ij}}{L_{ij}} \cdot$$

10. Procédé permettant de mesurer une contrainte résiduelle dans une plaque mince selon la revendication 9, dans lequel des procédés de calcul pour $\omega_{ij}$, $\theta_{ij}$ et $I_{ij}$ sont comme suit :

$$\theta_{ij} = \frac{\omega_{ij}}{\rho_{ij}} \cdot \frac{180}{\pi} ;$$

$$\theta_{ij} = \arcsin \frac{h'_{ij}}{L_{ij}} ;$$

et

$$\frac{1}{\rho_{ij}} = \frac{M_{ij}}{EI_{ij}} ;$$

dans lequel
$\rho_{ij}$ est le rayon de courbure de la iième ailette après la jième découpe, et $\theta_{ij}$ est un angle de flexion de la iième ailette après la jième découpe.

11. Procédé permettant de mesurer une contrainte résiduelle dans la plaque mince selon la revendication 10, dans lequel S2 comprend en outre : la correction de la contrainte résiduelle ;

$$\Delta(\sigma_{ij}) = \frac{\sigma_{ij} \cdot \Delta z}{S - j\Delta z} ;$$

et

$\sigma'_{ij} = \sigma_{ij} - \Sigma_{I}^{j-1}\Delta\sigma_{ij}$ ; dans lequel $\Delta(\sigma_{ij})$ est un effet de contrainte résiduelle de la couche $\Delta z$ sur la contrainte résiduelle de la partie non découpée, et $\sigma'_{ij}$ est une valeur de correction de contrainte résiduelle de la iième ailette lors de la jième découpe.

S 1 : Prearrange and cut a plurality of fins that are parallel to a length direction of a thin plate at equal intervals in a width direction of the thin plate, where a length of each fin is the same as each other and less than a width of the thin plate, and each fin has a fixed end and a movable end that are opposite each other, compute x-direction strain and x-direction residual stress in the length direction of the thin plate borne by each fin according to lengths of the each fin before and after cutting, and obtain distribution of x-direction residual stress in the width direction of the thin plate according to the x-direction residual stress of all the fins

S2 : Repeatedly cut the fixed ends of the fins in a thickness direction of the thin plate, record a cutting parameter, and a warpage condition and a bending parameter of the each fin after each cutting, compute a total cutting depth and x-direction residual stress of the each fin after each cutting, and obtain distribution of x-direction residual stress in the thickness direction of the thin plate borne by an ith fin according to all the x-direction residual stress

S 3 : Compute distribution of x-direction residual stress on a yz cross section of the thin plate according to the x-direction residual stress of the ith fin computed in S1 and corresponding x-direction residual stress of the ith fin after jth cutting in S2

Fig. 1

Fig. 2

Fig. 3

Fig. 4

Fig. 5

*A*

*B*

Fig. 6

*A*

$P'_{1j}$

$P'_{2j}$

$P'_{3j}$

*B*

$P'_{ij}$

Fig. 7

Fig. 8

**EP 4 375 634 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211212028
- JP S63268517 A